# EUROPEAN PATENT SPECIFICATION

(11) **EP 4 283 546 B1**
(45) Date of publication and mention of the grant of the patent: **24.06.2026**
(21) Application number: 23174773.4
(22) Date of filing: 23.05.2023
(51) Int. Cl.: G06Q 10/10, G06Q 10/0633

(54) **MACHINE LEARNING PREDICTION OF ADDITIONAL STEPS OF A COMPUTERIZED WORKFLOW**
VORHERSAGE VON ZUSÄTZLICHEN SCHRITTEN EINES COMPUTERISIERTEN ARBEITSABLAUFS DURCH MASCHINENLERNEN
PRÉDICTION D'APPRENTISSAGE AUTOMATIQUE D'ÉTAPES SUPPLÉMENTAIRES D'UN FLUX DE TRAVAIL INFORMATISÉ

(30) Priority: 24.05.2022 US 202217752555; 24.05.2022 US 202217752564
(43) Date of publication of application: 29.11.2023
(73) Proprietor: ServiceNow, Inc., Santa Clara, California 95054 (US)
(72) Inventor: El Hattami, Amine, Santa Clara, CA 95054 (US); Pal, Christopher Joseph, Santa Clara, CA 95054 (US)
(74) Representative: Fuchs Patentanwälte Partnerschaft mbB

(56) References cited:
- WO-A1-2021/138163
- US-A1- 2019 370 615
- US-B1- 10 554 817

## Description

### BACKGROUND OF THE INVENTION

Machine-assisted development of computer instructions allows for developers to create executable sequences of computer actions without requiring significant knowledge of a computer language. Computer instructions can be in the form of automated processes, computer programs, or other collections of instructions that tell a computer how to operate. To develop computer instructions, for example, developers can interact with a graphical user interface of a development tool. However, sometimes, developers may be challenged by the difficulty of learning to use the development tool. They may be overwhelmed by the many options within the development tool and may not utilize best practices. Thus, there is a need for techniques to assist developers in this regard. US 10 554 817 B1 provides for a contact centre system that detects patterns in the behaviour of service agent users and customers having a customer service issue. WO 2021/138163 A1 discloses a method for analysis and determination of relationships from a variety of data sources. US 2019/370615 A1 discloses state machine methods to improve computer network functionality relating to natural language communication.

### BRIEF DESCRIPTION OF THE DRAWINGS

Various embodiments of the invention are disclosed in the following detailed description and the accompanying drawings.
Figure 1 is a block diagram illustrating an embodiment of a system for automatically predicting and implementing additional steps of a computerized flow.
Figure 1A is a block diagram illustrating a further embodiment of a system for automatically predicting and implementing additional steps of a computerized flow.
Figure 2 is a diagram illustrating an example of a computerized flow.
Figure 3 is a diagram illustrating an example of an automatically implemented computerized flow that promotes best practices.
Figure 3A is a diagram illustrating an example of a computerized flow.
Figure 4 is a flow diagram illustrating an embodiment of a process for synthetically generating training data.
Figure 4A is a block diagram illustrating an embodiment of a system for synthetically generating training data
Figures 5A-G are diagrams illustrating user interface examples associated with automatically predicting and implementing additional steps of a computerized flow.
Figure 6 is a flow diagram illustrating an embodiment of a process for automatically predicting and implementing additional steps of a computerized flow.
Figure 6A is a flow diagram illustrating an embodiment of a process for automatically implementing a computerized flow based on text input.
Figure 7 is a functional diagram illustrating a programmed computer system.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications, and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Machine learning prediction of additional steps of a computerized workflow is disclosed. An indication to predict one or more additional steps to be added to a partially specified computerized workflow based at least in part on the partially specified computerized workflow is received. Text descriptive of at least a portion of the partially specified computerized workflow is generated. Machine learning inputs based at least in part on the descriptive text are provided to a machine learning model to determine an output text descriptive of the one or more additional steps to be added. One or more processors are used to automatically implement the one or more additional steps to be added to the partially specified computerized workflow. Automatic flow implementation from text input is also disclosed. A user provided text description of at least a portion of a desired workflow is received. Context information associated with the desired workflow is determined. Machine learning inputs based at least in part on the text description and the context information are provided to a machine learning model to determine an implementation prediction for the desired workflow. One or more processors are used to automatically implement the implementation prediction as a computerized workflow implementation of at least a portion of the desired workflow.

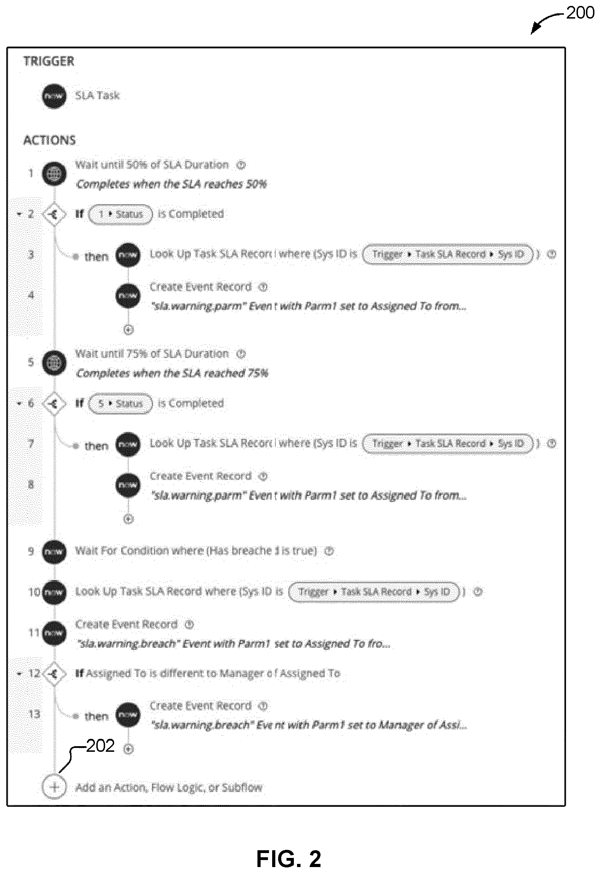

Many low-code environments rely on a graphical user interface, which hides executable code associated with workflows. As used herein, a workflow, which can also be called a "computerized workflow", "computerized flow", "automation flow", "action flow", "flow", and so forth, refers to an automatic process (e.g., performed by a programmed computer system) comprised of a sequence of actions. The sequence of actions can also be called a sequence of steps, sequence of action steps, etc. Oftentimes, a workflow also includes a trigger for the sequence of actions. Each action or step in a workflow may be considered as a graphical representation of lines or blocks of executable code (written in, for example, Java, JavaScript, C#, or C++) which when executed by a processor, cause a computer-implemented method (defined by the steps in the workflow) to be carried out. Examples of flows are shown in Figures 2, 3, 3A and 5A-G. The techniques disclosed herein solve the technological problem of allowing for efficient computerized workflow steps generation in scenarios in which the use of a graphical user interface is difficult. The techniques described herein enable users to create simple or complex computer-implemented methods by assembling graphically represented action steps (having underlying executable code) into workflows, without ever requiring the user to learn how to write in the underlying executable coding language. Techniques disclosed herein also allow users to use free-form natural language to instantiate steps of workflows, which can be displayed as visual steps in the graphical user interface. Stated alternatively, automation flows can be generated from natural language descriptions. Using a graphical user interface can be challenging for inexperienced users, especially since there may be hundreds of available steps from which to choose. The techniques disclosed herein have many benefits, including reducing the user learning curve, promoting best practices for inexperienced users, and helping experienced users discover new features.

In various embodiments, the techniques disclosed herein utilize large, pre-trained models, leading to a highly adaptable system that requires few or no labeled samples, and as a result, is more robust to user input variation compared to rule-based techniques. The techniques disclosed herein are widely applicable to different types of automation flow builder applications. In various embodiments, as described in further detail herein, a trained machine learning model receives an incomplete flow in a text format and then predicts next step(s) based on patterns found in training data. In other examples, as described in further detail herein, a trained machine learning model receives a natural language description of a flow and then predicts all the actions for the flow in the proper order. Manual processing and feature engineering are not required because the machine learning model has learned to perform this task using a large set of examples during training. In some examples, pre-processing may not be required because user input can be ingested as is. In various embodiments, the machine learning model's output is converted to application programming interface (API) calls to be transmitted to a flow builder application. These techniques are described in further detail below.

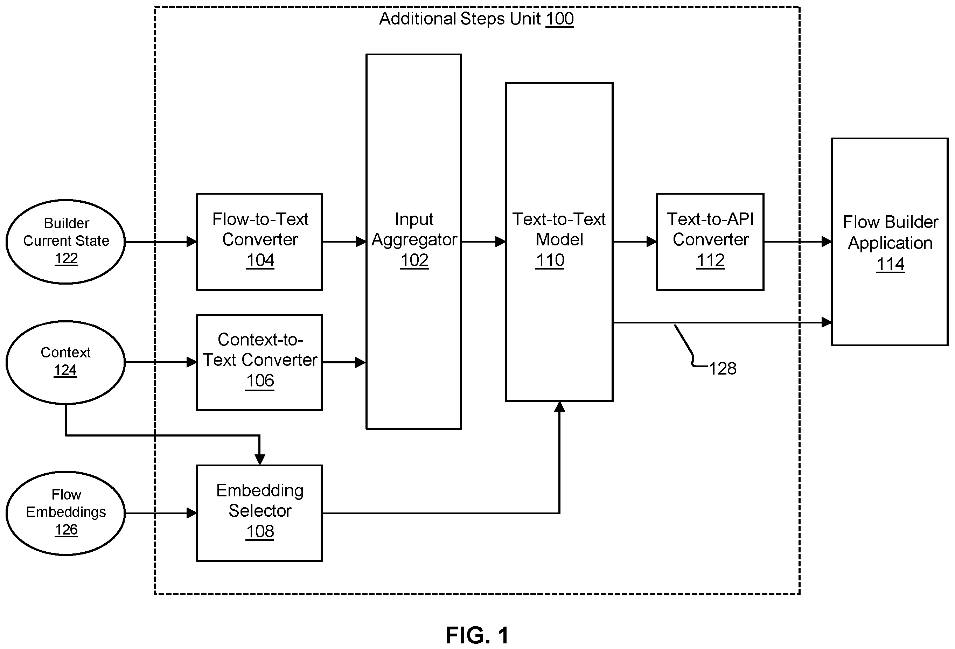

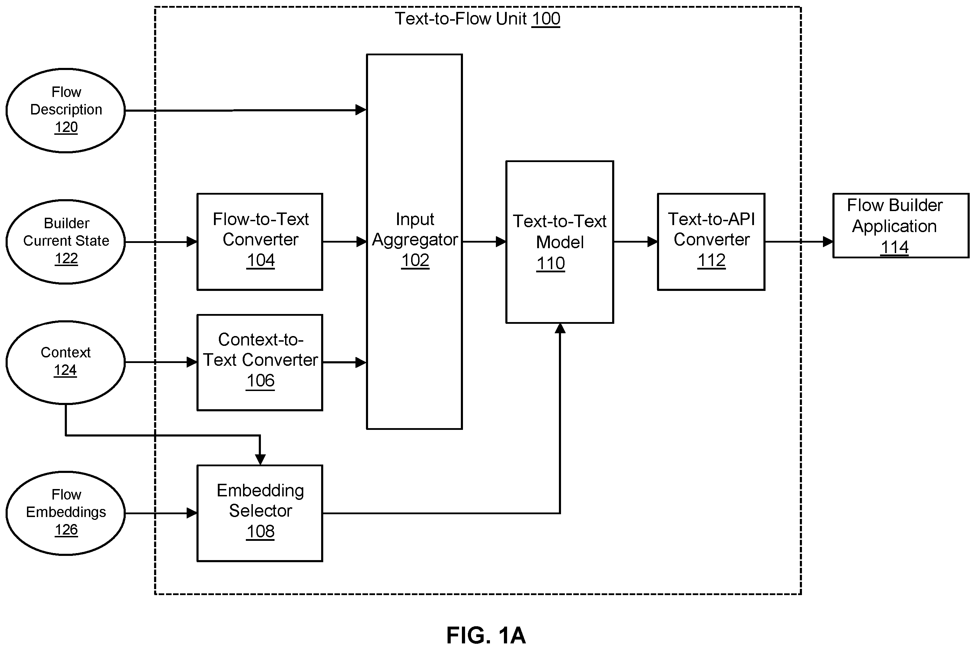

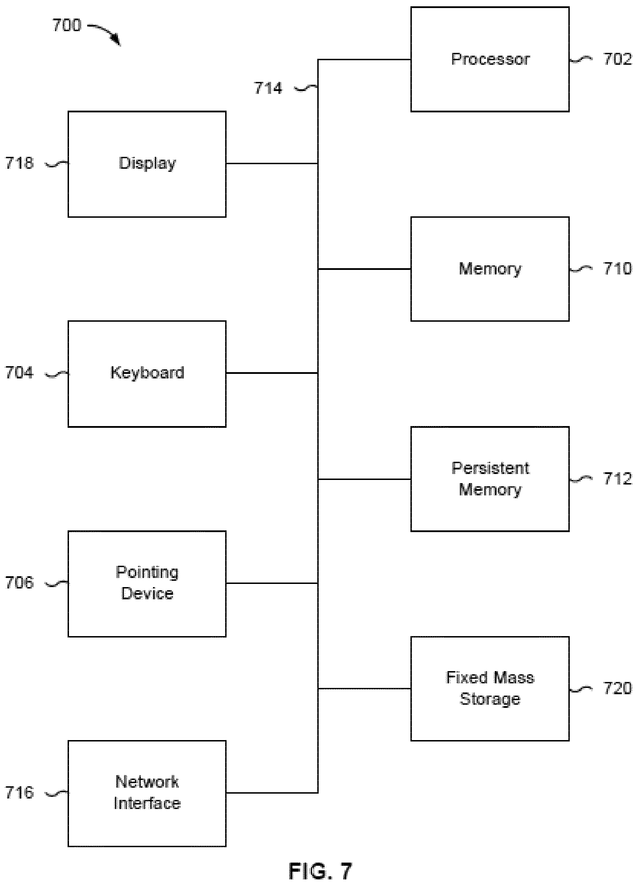

Figure 1 is a block diagram illustrating an embodiment of a system for automatically predicting and implementing additional steps of a computerized flow. In the example illustrated, additional steps unit 100 is comprised of input aggregator 102, flow-to-text converter 104, context-to-text converter 106, embedding selector 108, text-to-text model 110, and text-to-API converter 112. In the example shown, flow builder application 114 is separate from additional steps unit 100, but it is also possible, in alternative embodiments, for flow builder application 114 to be incorporated as a component of additional steps unit 100. In some embodiments, additional steps unit 100 (including its components) is comprised of computer program instructions that are executed on a general-purpose processor, e.g., a central processing unit (CPU), of a programmed computer system. Figure 7 illustrates an example of a programmed computer system. It is also possible for the logic of additional steps unit 100 to be executed on other hardware, e.g., executed using an application-specific integrated circuit (ASIC) or a field- programmable gate array (FPGA). In the example illustrated, additional steps unit 100 provides outputs to flow builder application 114. In various embodiments, flow builder application 114 includes software that can be interfaced with via an API. In the example illustrated, the input data to additional steps unit 100 are builder current state 122, context 124, and flow embeddings 126.

In various embodiments, input aggregator 102 creates input text for text-to-text model 110. In the example illustrated, input aggregator 102 receives text inputs from flow-to-text converter 104 and context-to-text converter 106. In various embodiments, input aggregator 102 determines a flow description based on the output of flow-to-text converter 104 and combines this with context information that is a text output of context-to-text converter 106. In some embodiments, there is a specified order in which the information is combined because starting with the elements that have more influence on the output of text-to-text model 110 can lead to improved results.

In the example illustrated, builder current state 122 is a mandatory input used to predict a partial flow. Predicting a partial flow adds steps to an incomplete flow either by specifying a single step or multiple steps. The single-step use case can enable the techniques disclosed herein to work in a chatbot-like system where the user provides interaction to create the flow step-by-step. In various embodiments, builder current state 122 includes two items: 1) existing steps: the steps already created by the user by using a user interface, from a previous call to additional steps unit 100, or using another step generation technique; and 2) current position: the position from which the user had requested to generate next steps (stated alternatively, the index in the existing steps list). In the example shown, builder current state 122 is received by flow-to-text converter 104. Flow-to-text converter 104 converts the existing (incomplete) flow to a text format. In some embodiments, the existing steps in builder current state 122 are in either an Extensible Markup Language (XML) or JavaScript Object Notation (JSON) format. Thus, in some embodiments, flow-to-text converter 104 converts XML or JSON data to text. Builder current state 122 can be in any known data format (e.g., XML, JSON, etc.). The examples of XML and JSON are merely illustrative and not restrictive.

Suppose the existing steps are "Send Email" ("Send Email" being the step name) and "Create Incident Record" ("Create a record" being the step name and "Incident" being a step parameter that represents a table name). The current position would be the third position and indicates the insertion point. In various embodiments, flow-to-text converter 104 first serializes the existing steps by converting each one from name to description using a one-to-one mapping and extracting any existing step parameter. The output that is generated may be in the format: "Existing Steps: step 1 [parameter 1], step 2, ..., step N [parameter N] Current Position: X". In this format, "Existing Steps" and "Current Position" are prefixes that differentiate the existing steps from the current position. This is needed because the output of flow-to-text converter 104 is in a text format. Text-to-text model 110 can verify how likely a specific step is to occur given the previous ones and their parameters learned during the training phase of text-to-text model 110.

In the example illustrated, context 124 is an optional input. Context 124 may be used to condition text-to-text model 110's output. This conditioning aims to refine text-to-text model 110's prediction based on external factors. With respect to context 124, text-to-text model 110 is able to use specific available context items to modulate its output. For example, depending on the creator of the flow, or the business unit, the handling of some cases such as the error handling, logging, or managing approvals can be different. For example, a user or set of users might send an email to an administrator if the flow fails, while others will log an error message and terminate the flow. Context 124 affects text-to-text model 110 through patterns in the training data used to train text-to-text model 110. In some embodiments, context 124 includes the following items: 1) application metadata: application properties such as application name, business unit, creator, etc.; 2) flow metadata: flow properties such as title, creation date, creator, etc.; and 3) preferences, e.g., embedding ID (as described in further detail below with respect to flow embeddings). Context 124 may be in an XML, JSON, or other known data format. The above can be considered conditioning parameters for text-to-text model 110.

In various embodiments, context-to-text converter 106 receives context 124 (e.g., in an XML or JSON format) and encodes all the elements of the context except the flow embedding ID into a text format. In various embodiments, all the elements of the context are represented as a list of key-value pairs, which means that the text output of context-to-text converter 106 can be formatted in the following manner: "Preferences: key 1[Value 1], ..., Key n [Value n] App Metadata: key 1[Value 1], ..., Key n [Value n] Flow Metadata: key 1 [Value 1], ..., Key n [Value n]". "Preferences", "App Metadata", and "Flow Metadata" are prefixes that differentiate each part of the serialized text. Context-to-text converter 106 does not require having all the context items available, meaning that, e.g., if the flow metadata is missing, flow- to-text converter 106 will only serialize the other available items. In scenarios in which the entire context is unavailable, context-to-text converter 106 outputs an empty string.

In the example illustrated, flow embeddings 126 is another optional input. Flow embeddings 126 includes a list of previously learned flow embeddings. In various embodiments, flow embeddings 126 comprises embeddings that have been based on existing flows and that can be used to condition text-to-text model 110 on how to predict next steps in a flow. Such conditioning can tailor text-to-text model 110's output to resemble previously created flows. In some embodiments, flow embeddings 126 is a list of fixed-sized tensors that are learned individually during training of text-to-text model 110. Each flow embedding can be related to a single dataset and can be stored on a disk or in memory. The embeddings can be viewed as a way to describe the differences between training using one set of data versus another and as a way to factorize model weights. For example, two different datasets may be used during a training stage to train a single machine learning model with a single set of model weights and two different embeddings (different embeddings for each of the datasets). Then, during deployment of the machine learning model in inference mode, the embeddings can be swapped to match each training dataset without interrupting the machine learning model. While it is possible to achieve similar results without using the embeddings by training two different models, using embeddings reduces computational and other costs because only a single model needs to be created, deployed, and maintained. Notwithstanding the above, it is also possible to train two different models and use the techniques disclosed herein since the embedding feature is optional. This may be useful in scenarios in which datasets need to be separated (e.g., for confidentiality reasons). In the example shown, embedding selector 108 selects and loads an embedding (e.g., a tensor) from flow embeddings 126. This can be accomplished by using a flow embedding ID of context 124 to indicate the selection. In scenarios in which no flow embedding ID is provided, embedding selector 108 outputs a NULL tensor. In some embodiments, a selected embedding tensor is loaded to a processor implementing text-to-text model 110, e.g., a central processing unit (CPU), graphics processing unit (GPU), etc. when the embedding is selected.

In various embodiments, text-to-text model 110 predicts next step(s) of a partial flow as modulated by other available inputs, such as context or flow embeddings. In some embodiments, the flow is predicted by text-to-text model 110 in a text format as follows: "Step X N+1, Step Z N+2 [parameter 1], ..., Step K N+K [parameter 1, ..., parameter M]" where N is the number of existing steps, and K is the number of predicted steps. Depending on context, the output can include a single parameter, multiple parameters, or zero parameters. The number of predicted steps varies depending on where the user requests the next step. The number of predicted steps is oftentimes inversely proportional to the number of existing steps, meaning that if the user has created only two steps and then requests next steps, text-to-text model 110 may predict only one next step. However, if the user has created ten steps, text-to-text model 110 may predict five next steps. The reason for this is that text-to-text model 110 would have more confidence to predict more steps given a larger number of existing steps. In various embodiments, text-to-text model 110 outputs a confidence score associated with its prediction. In the example illustrated, this is shown as second output 128 from text-to-text model 110 directly to flow builder application 114. In some embodiments, the confidence score is the inverse of the average of the Shannon entropy of each predicted step. A high entropy indicates a high uncertainty. In various embodiments, the confidence score is a value between 0 and 1. Flow builder application 114 may utilize the confidence score to determine whether to present text-to- text model 110's prediction to a user.

The architecture of text-to-text model 110 may be based on various machine learning architectures configured to perform end-to-end learning of semantic mappings from input to output, including transformers and recurrent neural networks (RNNs) (large language models (LLMs)). Text-to-text model 110 has been trained on text examples and is configured to receive a text input and generate a text output. In various embodiments, text-to-text model 110 has been trained by utilizing transfer learning. Transfer learning refers to first pre-training a model on a data-rich task and then fine-tuning the model on a downstream task. In some embodiments, text-to-text model 110 is a LLM that has an Encoder-Decoder architecture. In various embodiments, text-to-text model 110 has been pre-trained on a multi-task mixture of unsupervised and supervised tasks for which each task is converted into a text-to-text format. An example of an LLM model with an Encoder-Decoder architecture is the T5 model.

From a model deployment perspective, using a text-to-text architecture reduces the effort to deploy a new model because it is not necessary to redo performance or hardware compatibility tests. In contrast, other machine learning models that perform classification using a single classification layer with a fixed number of output categories need to be modified when the number of classification classes changes, which can push the model response time above an upper bound that an application requires. Furthermore, if the number of classes grows exponentially, a traditional model might no longer fit the available hardware. In a traditional machine learning implementation, it may also be necessary to add a new classification component for each task in a multitask setup. In contrast, with the techniques disclosed herein, only a single configuration needs to be modified.

In some embodiments, text-to-text model 110 operates in an online continual learning cycle that requires no or minimal human intervention. In this cycle, the following steps may occur: 1) using a data collector to continuously monitor and obtain flow data and request a model trainer to initiate training of a new model after a specified number of data samples is collected; 2) causing the model trainer to use a latest model (or, if such a latest model does not exist, use a generic pre-trained model that was fine-tuned on the next step prediction task) as a starting point for training a new personalized model that fits the latest patterns and trends learned from a single user or set of users; 3) validating the personalized model by performing various checks and other testing; and 4) deploying the trained model to provide next step(s) predictions. Using either a latest or a generic model as a starting point for training has multiple advantages. First, it gives new users a good starting point (generic model) with all the typical use cases, making a model available to them early, as opposed to waiting until an acceptable amount of data is collected to fine-tune a model from scratch. Second, it makes training time shorter, which reduces the computational cost. Validating the model acts as a safeguard to avoid deploying models that have poor performance or adversarial cases, e.g., with invalid flows that affect model performance.

In the example illustrated, text-to-API converter 112 converts a text output of text-to-text model 110 to an API format. In various embodiments, text-to-API converter 112 uses a defined one-to-one mapping from step descriptions to API calls. In various embodiments, all available steps are enumerated and known by text-to-API converter 112. Stated alternatively, in various embodiments, a list of step IDs corresponding to a list of available steps that can be outputted by text-to-text model 110 is kept by text-to-API converter 112 and mapped one-to-one to a list of API calls. In the example illustrated, additional steps unit 100 does not create the final flows, but rather outputs API calls to flow builder application 114 to complete the conversion of the model output to actual steps of flows. Flow builder application 114 is instructed to create flow steps via API calls. An example of a flow builder application is the ServiceNow^{®} Flow Designer Platform. However, this example is merely illustrative and not restrictive. The techniques disclosed herein are not limited to this builder and can be utilized with any other automation flow builder application. Handling a new builder application includes creating the step descriptions used as the output of text-to-text model 110 and updating text-to-API converter 112 with new API calls (e.g., creating one-to-one mapping updates). Furthermore, additional steps unit 100 and any of one or more flow builder applications may be integrated into a single, cohesive unit without changing the techniques disclosed herein.

In the example shown, portions of the communication path between the components are shown. Other communication paths may exist, and the example of Figure 1 has been simplified to illustrate the example clearly. Although single instances of components have been shown to simplify the diagram, additional instances of any of the components shown in Figure 1 may exist. The number of components and the connections shown in Figure 1 are merely illustrative. Components not shown in Figure 1 may also exist. Furthermore, additional inputs may be received and processed by the system of Figure 1. To illustrate this, Figure 1A is provided, which is a block diagram illustrating a further embodiment of a system for automatically predicting and implementing additional steps of a computerized flow which additionally receives and processes a flow description 120.

Figure 1A illustrates a text-to-flow unit 100. Text-to-flow unit 100 may comprise some or all of the components of the additional steps unit 100. In the example configuration shown in Figure 1A, text-to-flow unit 100 includes all of the same components of the additional steps unit 100 and is configured to process flow description 120.

In various embodiments, flow description 120 is a mandatory text input that describes either an entire flow, a partial flow, or a single step (e.g., a single action in a flow). Flow description 120 comprises a step description that can be a known description or any other semantically equivalent description (e.g., "Create record" and "Add a record to a table" will both generate the same flow step). In the example shown, flow description 120 is received by input aggregator 102. In various embodiments, input aggregator 102 creates input text for text-to-text model 110. In various embodiments, input aggregator 102 does not modify flow description 120. In various embodiments, input aggregator 102 checks to ensure that flow description 120 is a non-empty string because flow description 120 is mandatory, whereas the other inputs to text-to-flow unit 100 are not. In the example illustrated, input aggregator 102 also receives text inputs from flow-to-text converter 104 and context-to-text converter 106. In various embodiments, input aggregator 102 determines a flow description based on flow description 120 and the output of flow-to-text converter 104 and combines this with context information that is a text output of context-to-text converter 106. In some embodiments, there is a specified order in which the information is combined because starting with the elements that have more influence on the output of text-to-text model 110 can lead to better results.

The techniques disclosed herein can also be applied to other information mediums, such as audio or video. Stated alternatively, a flow description may be provided in another format (e.g., as audio, video, etc.). For embodiments in which an audio or video flow description is received, text-to-flow unit 100 can include a media-to-text converter module that receives the audio and/or video and converts the audio and/or video to text. For example, to convert audio to text, any one of various speech recognition techniques known to those skilled in the art may be utilized to generate a text form (e.g., in the same format as flow description 120) of the audio input. Text-to-flow unit 100 can then utilize the text form in the same manner as that described for flow description 120. Similarly, video-to-text techniques known to those skilled in the art may be utilized to generate the text form from a video input.

In the example illustrated, builder current state 122 is an optional input used when predicting a partial flow. Predicting partial flows adds steps to an incomplete flow either by specifying a single step or multiple steps. The single-step use case can enable the techniques disclosed herein to work in a chatbot-like system where the user provides interaction to create the flow step-by-step. In various embodiments, builder current state 122 includes two items: 1) existing steps: the steps already created by the user in the builder either by using a user interface or a previous call to text-to-flow unit 100; and 2) current position: the position from which the user had requested to generate the flow (stated alternatively, the index in the existing steps list). In the example shown, builder current state 122 is received by flow-to-text converter 104. Flow-to-text converter 104 converts the existing flow and the current position to a text format.

In various embodiments, text-to-text model 110, uses the existing steps described previously to modulate the output when predicting partial flows, which is helpful for steps that are affected by previously created ones. Text-to-text model 110 can verify how likely a specific step is to occur given the previous ones learned during the training phase of text-to-text model 110. In scenarios in which the user did not create any steps before making a call to text-to-flow unit 100, builder current state 122 would not have any meaningful information and the output of flow-to-text converter 104 would be an empty string.

In the example illustrated, context 124 is another optional input. Context 124 may be used to condition text-to-text model 110's output. This conditioning aims to refine text-to-text model 110's prediction based on external factors other than a flow description provided by the user. Context 124 affects text-to-text model 110 through patterns in the training data used to train text-to-text model 110. In some embodiments, context 124 includes the following items: 1) application metadata: application properties such as application name, business unit, creator, etc.; 2) flow metadata: flow properties such as title, creation date, creator, etc.; 3) preferences, e.g., enable one-to-one prediction (as described in further detail below), set the list of the steps to use (as described in further detail below with respect to out-of-domain step description), and embedding ID (as described in further detail below with respect to flow embeddings). Context 124 may be in an XML, JSON, or other known data format. The above can be considered conditioning parameters for text-to-text model 110.

In various embodiments, text-to-text model 110 predicts an entire flow or partial flow based at least in part on flow description 120. Text-to-text model 110 may also utilize inputs other than a user-provided flow description depending on builder current state 122 and context 124. Specifically, the prediction of text-to-text model 110 may be modulated by inputs such as context parameters, existing steps, and/or flow embeddings. In some embodiments, the flow is predicted by text-to-text model 110 in a text format as follows: "Step description 1, Step description 2 [parameter 1], ..., Step description N [parameter 1, ..., parameter M]". Depending on the user input, the output can include a single parameter, multiple parameters, or zero parameters. The architecture of text-to-text model 110 may be based on various machine learning architectures configured to perform end-to-end learning of semantic mappings from input to output, including transformers and recurrent neural networks (RNNs) (large language models (LLMs)). Text-to-text model 110 has been trained on text examples and is configured to receive a text input and generate a text output. In various embodiments, text-to-text model 110 has been trained by utilizing transfer learning. Transfer learning refers to first pre-training a model on a data-rich task and then fine-tuning the model on a downstream task. In some embodiments, text-to-text model 110 is an LLM that has an Encoder-Decoder architecture. In various embodiments, text-to-text model 110 has been pre-trained on a multi-task mixture of unsupervised and supervised tasks for which each task is converted into a text-to-text format. An example of an LLM model with an Encoder-Decoder architecture is the T5 model.

Text-to-text model 110 can be configured to predict more than what the user requested in the flow description. For example, text-to-text model 110 may predict an "if" step after an "Ask for approval" step even if the user only requested an "Ask for approval" step because this pattern occurs frequently in training data. The purpose of this feature is to help the user follow best practices and reduce flow description length. While this feature can benefit novice users, a more experienced user may find it distracting. Therefore, in various embodiments, this feature can be disabled by enabling one-to-one prediction (text-to-text model 110 configured to predict precisely what the user describes) as a preference in context 124 (as described above).

Context 124 can also be used to control out-of-domain step descriptions by text-to-text model 110. To ensure that text-to-text model 110 does not output any out-of-domain steps, the user can provide a list of possible steps via context 124. Text-to-text model 110 will not predict a step in this mode if it is not in the provided list. For example, the model output for "send an email, buy milk, create incident record" could be "Send an email, Create table record [incident]" with the "buy milk" step excluded if the "buy milk" step is not in the list of possible steps. On the other hand, if the user does not provide a list of possible steps, the model output for this example would be "Send an email, buy milk, Create table record [incident]." Though, text-to-API converter 112 may remove and log the "buy milk" step because it might not have an API call mapping for this step. System administrators can then later use the logged information to analyze user requests to determine what text-to-flow unit 100 should be configured to handle. For example, if text-to-flow unit 100 only handles "send email" to communicate with individuals while users are trying to send information by Short Message Service (SMS), a system administrator may use this information to configure a "Send SMS" step. The user can also provide a new step (never seen in the training data) in the list of possible steps. Thus, instead of inventing a new step, text-to-text model 110 can use newly added steps that match flow descriptions. For example, assume the flow description includes "communicate via SMS." If the user adds a "Send SMS" step to the list of possible steps, text-to-text model 110 would output "Send SMS". Alternatively, if there is no user-provided step, text-to-text model 110 may predict "communicate with SMS" on its own (inventing this step). This feature avoids the need to retrain text-to-text model 110 and reduces the computational cost of training text-to-text model 110. In various embodiments, the user can also manually edit results that text-to-text model 110 outputs incorrectly from a flow builder user interface.

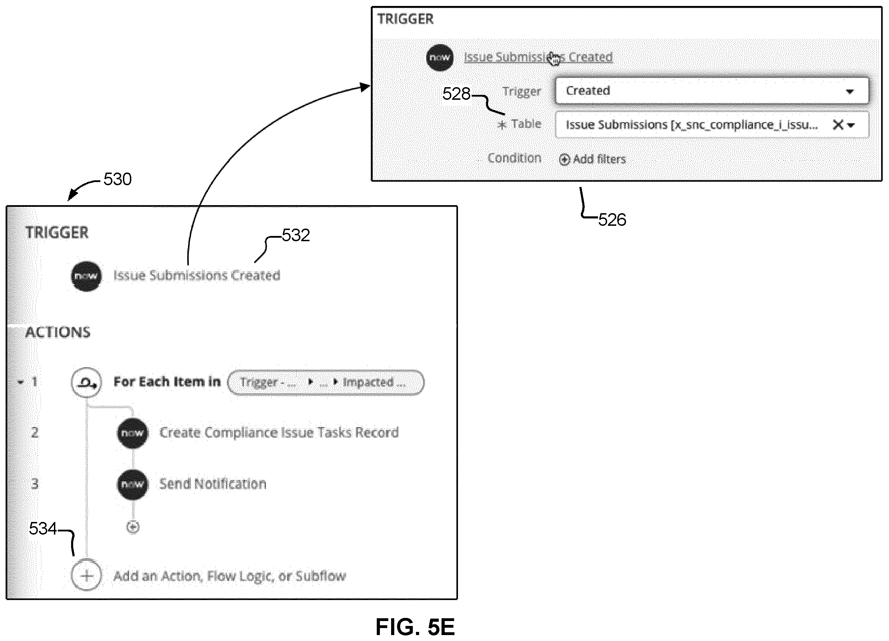

In some embodiments, in addition to predicting flow steps, text-to-text model 110 also extracts slot values for steps. For example, in the input "create an incident record," the slot value is "incident," which represents a table name where the record will be created. Figure 5E illustrates another example of a slot value representing a table. Text-to-text model 110 does not require the user to provide the exact name for values with identifier names (e.g., table names, application names, etc.). For example, text-to-text model 110 can predict the same table name for "create an incident record" and "create an issue record," if there is no "issues" table (extrapolating from incident record to issues record). Thus, due to the architecture and training of text-to-text model 110, variations in how a user might describe a slot value are handled automatically. For example, from the model perspective, "create an incident record" is similar to "create a record in the incident table" because of the natural language similarity. Slot value format variations in date and time values are encountered during training and thus can be handled. For example, in various embodiments, text-to-text model 110 is trained to extract the same time value from "8 pm", "20h," and "8 p.m." It is also possible to achieve correct results without seeing all possible combinations during training (e.g., not encounter a pattern with a typo but still be able to correct the typo because similar typos are encountered during training). By utilizing natural language pre-training, the amount of training data required to achieve reliable performance is reduced.

Due to the text-to-text architecture utilized, text-to-text model 110 can adapt to new sets of steps without any changes to the model. This reduces the required modeling and experimentation effort. In addition, this ability is crucial from a use case perspective because users will have a diverse set of enabled steps that can evolve rapidly. Thus, using the techniques disclosed herein, it is possible to avoid creating a new model for each user, which reduces costs. As mentioned above, text-to-text model 110 handles variations in how a user describes a flow, which is more powerful than existing match-based systems. For example, text-to-text model 110 can determine that "lookup records" and "search for entries in a table" can refer to the same thing depending on use case. In contrast, handling this with either a rule-based system or classical natural language processing (NLP) models can be highly challenging. Another benefit is that text-to-text model 110 can understand the positionality of steps and the composition of a flow. In the flow examples disclosed herein, a flow starts with a trigger (e.g., "when an email is received"). However, a user might not begin the flow description with the trigger description.
For example, text-to-text model 110 would produce the same flow for "Create an incident record when an email is received" and "When an email is received, create an incident record." This advantage is highly significant as the number of steps increases (e.g., for a flow length of ten steps). Text-to-text model 110 does not require seeing all possible combinations or ways to describe the same thing semantically because it is pre-trained in an unsupervised fashion on a large-scale language dataset before being fine-tuned for the text-to-automation flow task, which reduces the data requirements needed to fine-tune text-to-text model 110.

In the example illustrated, text-to-API converter 112 converts a text output of text-to-text model 110 to an API format. In some embodiments, text-to-API converter 112 uses a defined one-to-one mapping from step descriptions to API calls. In various embodiments, if the output of text-to-text model 110 includes an out-of-domain step description, text-to-API converter 112 removes the out-of-domain step and logs an event for a monitoring system. Thus, text-to-API converter 112 would only execute API calls for valid steps.

In the example illustrated, text-to-flow unit 100 does not create the final flows, but rather outputs API calls to flow builder application 114 to complete the conversion of the predicted flow in text format to actual flows. Flow builder application 114 is instructed to create a flow via API calls. An example of a flow builder application is the ServiceNow^{®} Flow Designer Platform. However, this example is merely illustrative and not restrictive. The techniques disclosed herein are not limited to this builder and can be utilized with any other automation flow builder application. Handling a new builder application includes creating the step descriptions used as the output of text-to-text model 110 and updating text-to-API converter 112 with new API calls (e.g., creating one-to-one mapping updates). Furthermore, text-to-flow unit 100 and any of one or more flow builder applications may be integrated into a single, cohesive unit without changing the techniques disclosed herein.

In the example shown, portions of the communication path between the components are shown. Other communication paths may exist, and the examples of Figures 1 and 1A have been simplified to illustrate the examples clearly. Although single instances of components have been shown to simplify the diagram, additional instances of any of the components shown in Figures 1 and 1A may exist. The number of components and the connections shown in Figures 1 and 1A are merely illustrative. Components not shown in Figures 1 and 1A may also exist.

Figure 2 is a diagram illustrating an example of a computerized flow. In the example shown, flow 200 is used to automate an information technology management process. In the example shown, flow 200 is comprised of a trigger and 13 action steps in response to the trigger. As illustrated, a step can be an action (single step), a sub-flow (a group of steps), or flow logic (e.g., an "if" statement). As another illustrative example, a flow could automate the following process: "When an email is received, create an incident record." Here, the email reception is the trigger, and creating the incident record is the step that is to be executed when the trigger condition is met. Flow 200 is also an example of a computerized flow created using a graphical user interface environment. To create a flow in such an environment, users may rely on a set of buttons to add or modify steps. For example, in the example illustrated, button 202 can be used to add an action, sub-flow, or flow logic.

As described previously herein, using a graphical user interface to generate flows has limitations. For example, users must be familiar with the platform tables and fields that the application or process uses and are required to know all the available steps. These requirements make learning to use the graphical user interface more difficult, especially for new users and especially if the design environment has many available steps and configurations. Another limitation is that experienced users may not be aware of new functionalities and can continue to use older features and methods to build flows. In some cases, failing to use the latest features might affect the performance, stability, or security of generated flows. Training of users is a way to overcome this limitation, but it requires considerable human effort. Another limitation is that inexperienced users might not follow best practices when building flows. Some steps require additional handling, e.g., checking for errors or edge cases that affect the quality and stability of the execution of a flow. The techniques disclosed herein for automatic prediction of additional steps in an incomplete flow, and the techniques for automated flow generation based on a text input, address the abovementioned limitations.

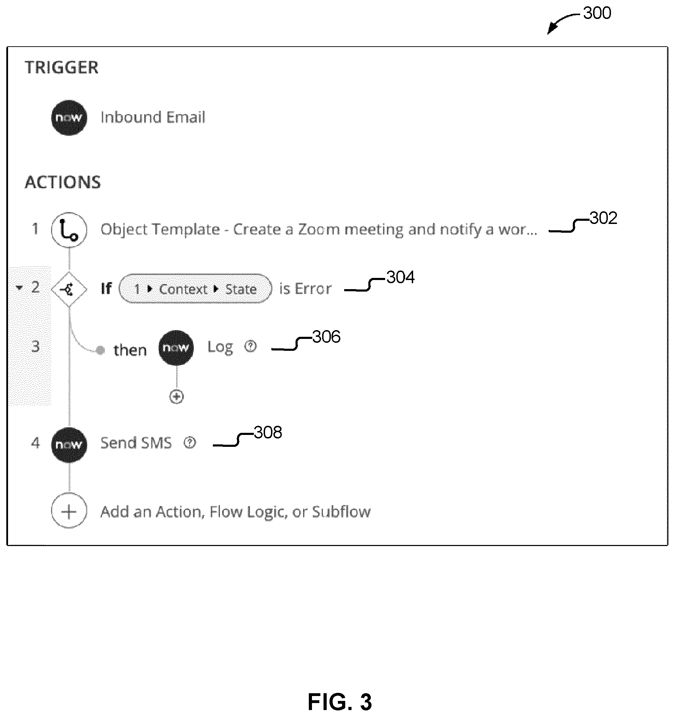

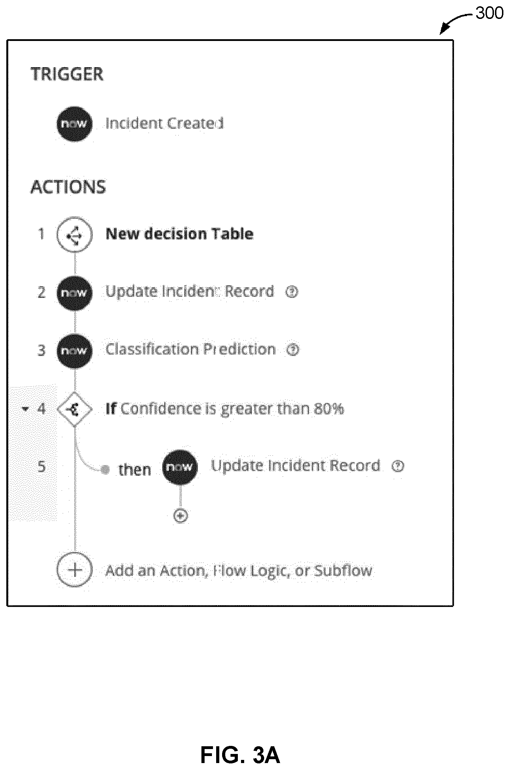

Figure 3 is a diagram illustrating an example of an automatically implemented computerized flow that promotes best practices. As described above, users should follow best practices when constructing flows. While creating a flow via a graphical user interface, an inexperienced user may not be familiar with best practices and handling of edge cases. For example, suppose a user desires to create a Zoom meeting when a specific email is received and then send a Short Message Service (SMS) message with some information. The user would probably be aware of the need to include items 302 (create a Zoom meeting step) and 308 (send SMS step) of flow 300. However, the user may not be aware of how to create error handling steps between the create Zoom meeting step and send SMS step. These error handling steps are items 304 and 306 in flow 300. Using the techniques disclosed herein, the user would be able to request next steps prediction after generating item 302. At that point, items 304 and 306 would be automatically generated using the techniques disclosed herein, and then the user would be able to finish flow 300 by manually generating item 308. This is an example of promoting best practices (error handling items 304 and 306) that improve flows from a technical perspective. This is also an example of teaching inexperienced users to properly build computerized flows. This reduces the amount of time needed to train inexperienced users, especially when non- technical contributors are a large portion of target users. The deep learning-based techniques disclosed herein have considerable scaling potential and have advantages over rule-based approaches. For example, deep learning-based approaches can tailor model predictions to individual users.

Figure 3A is a diagram illustrating a further example of an automatically implemented computerized flow that promotes best practices. From a high-level perspective, creating computerized flows is similar to writing computer code, a difference being that the user can interact with a user interface to create computerized flows instead of writing computer code in a text editor. Similar to writing computer code, users should follow best practices while building flows to ensure quality and robustness. Examples of best practices include handling errors or edge cases and following how a group of users handles some specific use cases. For example, the steps to report an execution error can be for one group to send an email to the administrator or send an SMS for another. However, inexperienced users might not follow these practices. Using the techniques disclosed herein, a machine learning model can predict best practices based on patterns in data and does not require any feature engineering or manual intervention.

Furthermore, because this feature is data-centric, it can be adapted to a single user or a group of users without any change in the training procedure and usage. For example, suppose the following verbose flow description: "When an incident record is created, *if the caller contains chief* then update the incident record *else if the caller's country is Brazil* then update the incident record *else if the caller is a VP* then update the incident record. After that, classify the incident case. If the confidence is greater than 80% then update the incident record." Flow 300 is a flow predicted using the techniques disclosed herein for the above flow description. Flow 300 does not include a set of if-else statements (in italics above). Instead, a decision table step was predicted and included in flow 300, which is a better way to handle such a use case compared to a set of if-else statements that are more difficult to maintain. This is an example of promoting best practices that improve flows from a technical perspective and also teaching inexperienced users on how to properly build computerized flows. This reduces the amount of time needed to train inexperienced users, especially when non-technical contributors are a large portion of target users.

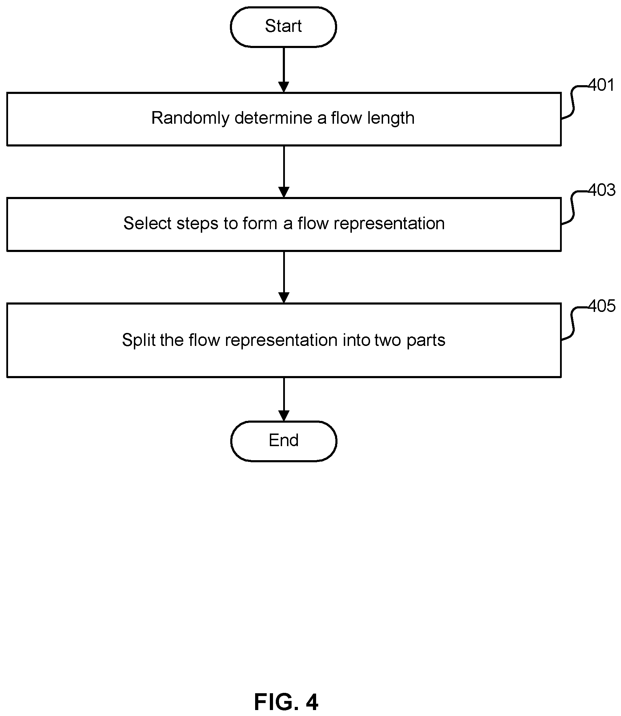

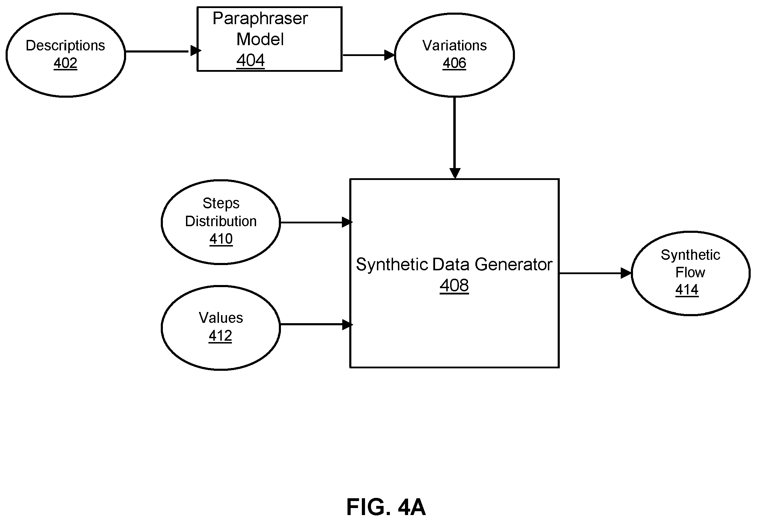

Figure 4 is a flow diagram illustrating an embodiment of a process for synthetically generating training data. In various embodiments, the process of Figure 4 is utilized to synthetically generate flows for machine learning model training purposes. In some embodiments, the synthetically generated training data is used to train text-to-text model 110 of Figure 1. Text-to-text model 110 of Figure 1 can be trained with little or no labeled training data as a result of using synthetically generated training data. It is also possible to perform traditional machine learning model training using labeled training data without using synthetically generated training data. Having a large amount of training data is important because text-to-text model 110 is a deep learning model. However, finding an acceptable amount of labeled data is a challenging task. There may be little prior work from which data can be leveraged, and labeling data is expensive because it requires manual effort. To solve these problems, in some embodiments, text-to-text model 110 is trained in two stages: a first stage in which the model is trained on a large set of synthetically generated data (a goal of this stage is learning how to predict next steps in a flow regardless of the patterns) and a second stage in which the model is trained on a smaller set of data that reflects the patterns of real users. In various embodiments, the process of Figure 4 is utilized to generate training data for the first stage. No labeled data is required by the first stage. The second stage also does not require labeled data because existing flows can be used. Thus, using these two stages, a machine learning model can be trained without the use of labeled data. In many scenarios, these training techniques are necessary due to a scarcity of training data. Without substantial amounts of training data, machine learning based techniques may perform worse than rule-based systems.

The process of Figure 4 can be utilized to generate a plurality of flow representation training instances. Each training instance is comprised of a model input portion and a model target portion. The model input portion is comprised of one or more flow steps that are received by a model to be trained. The model target portion is comprised of one or more additional steps that sequentially follow the model input portion. The objective is to train the model to predict model target portions (the additional steps of a flow representation) based on corresponding model input portions (the initial steps of the flow representation). Various machine learning model training techniques (e.g., backpropagation) may be utilized to determine model weights that achieve the objective of training the model to predict the model target portions based on the model input portions. In various embodiments, a unique label is assigned to each step that can possibly be utilized to form training data (model input and model target portions). Examples of labels are: "trigger_8", "action_0", "sub-flow_10", etc. to describe various steps.

At 401, a flow length is randomly determined. In various embodiments, this flow length "N" is determined according to a known length distribution that matches existing usage characteristics. Stated alternatively, a representative mix of flow lengths can be determined by utilizing a statistical distribution that realistically models flow lengths that occur for one or more particular use case(s).

At 403, steps to form a flow representation are selected. Stated alternatively, N steps are selected to match the determined flow length. In some embodiments, rules and/or distributions are utilized to constrain the steps selected and/or the order of steps. For example, in various embodiments, the first step must be a trigger step and subsequent steps can be action steps. The type of trigger may be selected according to a distribution drawn from user data to conform to existing usage patterns or selected randomly. Similarly, other steps may also be selected according to corresponding distributions or selected randomly. It is also possible to utilize conditional probability distributions or other rules to constrain which steps are selected based on preceding steps. In various embodiments, the flow representation comprises a sequence of step labels in text form. For example, if the selected steps are "trigger_8", "action_0", and "sub-flow_10", then the flow representation can be formatted as "trigger_8, action_0, sub- flow_10".

At 405, the flow representation is split into two parts. In various embodiments, the first part is a model input portion, and the second part is a model target portion. A machine learning model is trained to (e.g., model weights and/or biases are modified to) predict the second part when the first part is the input to the machine learning model. In some embodiments, the split point is random. In this manner, it is possible to generate training data for which model input portion and model target portion lengths vary. This training data makes it possible to train a model to predict different numbers of additional steps based on different numbers of initial steps.

Figure 4A is a block diagram illustrating an embodiment of a system for synthetically generating training data. In some embodiments, synthetically generated training data is used to train text-to-text model 110 of Figure 1A. Text-to-text model 110 of Figure 1A can be trained with little or no labeled training data as a result of using synthetically generated training data. It is also possible to perform traditional machine learning model training using labeled training data without using synthetically generated training data. Having a large amount of training data is important because text-to-text model 110 is a deep learning model. However, finding an acceptable amount of labeled data is a challenging task. There may be little prior work from which data can be leveraged, and labeling data is expensive because it requires manual effort. To solve these problems, in some embodiments, text-to-text model 110 is trained in two stages: a first stage in which the model is trained on a large set of synthetically generated data (a goal of this stage is learning how to predict a flow from a natural language description regardless of the actual steps, order, flow length, etc.) and a second stage in which the model is trained on a smaller set of data that reflects the patterns of real users. These training techniques improve model performance and reduce the labeled data requirements. In some scenarios, these training techniques are necessary because, without substantial amounts of data, machine learning-based techniques can perform worse than rule-based systems. Stated alternatively, because of scarcity of training data, data augmentation techniques may be required.

In the example illustrated in Figure 4A, paraphraser model 404 receives descriptions 402. In various embodiments, descriptions 402 are known text inputs. These may be known steps of flows that have been previously generated by flow builder application 114 of Figure 1A. In various embodiments, paraphraser model 404 is a text-to-text machine learning model that is trained to generate paraphrased text of descriptions 402. In some embodiments, paraphraser model 404 is an LLM (e.g., the T5 model) that has been specifically trained for a paraphrasing task.

Parameters of paraphraser model 404 (e.g., seed, output length, fluency, etc.) can be controlled and varied to generate a set of variations 406 for each input of descriptions 402. After enough plausible descriptions are generated, automation flows can be generated by synthetic data generator 408. In some embodiments, synthetic data generator 408 is comprised of one or more processors configured to construct flows based on input parameters and steps of flows. In the example illustrated, synthetic data generator 408 receives variations 406, steps distribution 410, and values 412 to generate synthetic flow 414. In various embodiments, synthetic data generator 408 first randomly determines a flow length following a known length distribution that matches an existing usage characteristic. The flow length indicates the number of steps that synthetic data generator 408 will take from variations 406 to construct a synthetic flow. Then, in various embodiments, for each step, synthetic data generator 408 randomly selects the step following steps distribution 410, selects one of the step's plausible descriptions at random with equal probability, and generates slot values either randomly for dates, times, emails, etc., or randomly with equal probability from values 412. In various embodiments, steps distribution 410 is a known distribution indicating how likely a specific step occurs in a real case situation. Steps distribution 410 can be drawn from real data to match patterns of a specific user with existing flows or randomly generated. In various embodiments, values 412 is a known set of values for table names, system names, etc. Synthetic data generator 408 can be called multiple times to generate multiple synthetic flows.

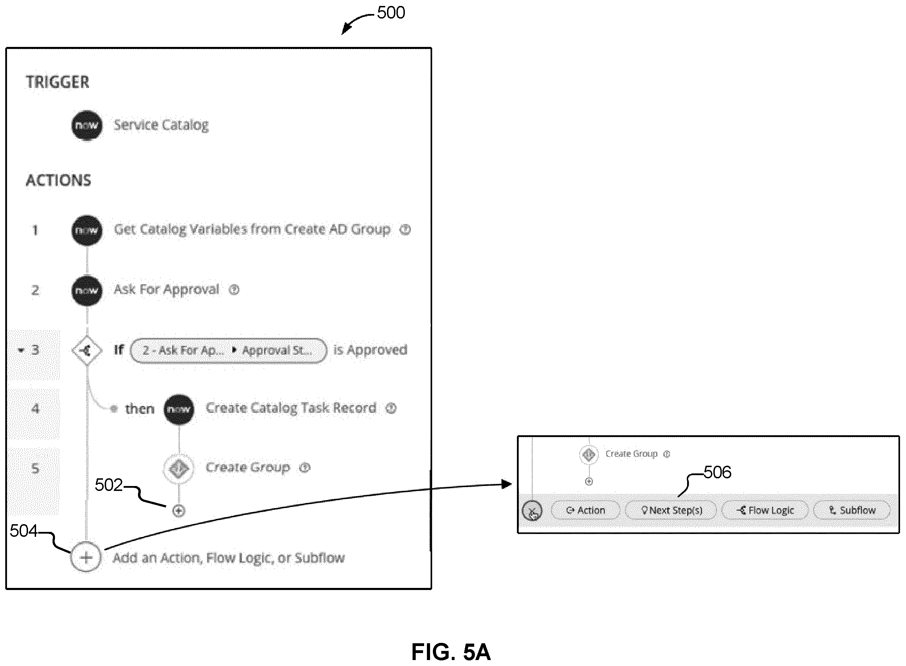

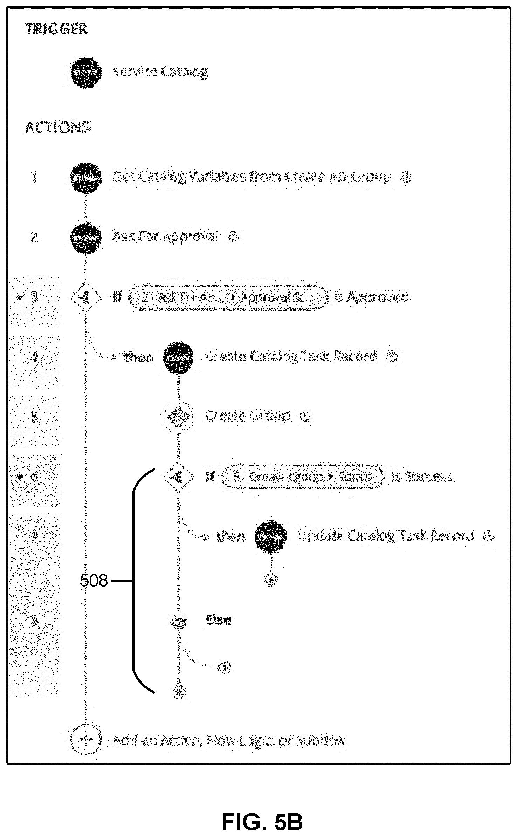

Figures 5A-B are diagrams illustrating user interface examples associated with automatically predicting and implementing additional steps of a computerized flow. Flow 500 in Figure 5A is an example of an incomplete flow presented in a graphical user interface. In the example shown, additional steps need to be inserted after the fifth action step ("Create Group") at point 502. In the example illustrated, a user can request generation of additional steps by clicking on add button 504. In this particular graphical user interface, selecting add button 504 brings up several user options (drawn to the side in a zoomed-in view for illustrative clarity).
These options include, in addition to adding an action, flow logic, or sub-flow, an option to automatically generate next steps (shown as next steps button 506). In various embodiments, adding an action, flow logic, or sub-flow is a manual user process (e.g., prompting the user to select options from drop-down menus), whereas selecting next steps button 506 triggers additional steps to be generated automatically by a machine learning model. In some embodiments, this machine learning model is text-to-text model 110 of Figure 1. In response to selecting next steps button 506, additional steps 508, shown in Figure 5B, may be automatically added to flow 500. These additional steps are comprised of if-else steps that include error handling for the "Create Group" step. Inclusion of error handling steps is an example of promoting best practices. In other examples, additional steps 508 are manually added to flow 500 in response to further user input.

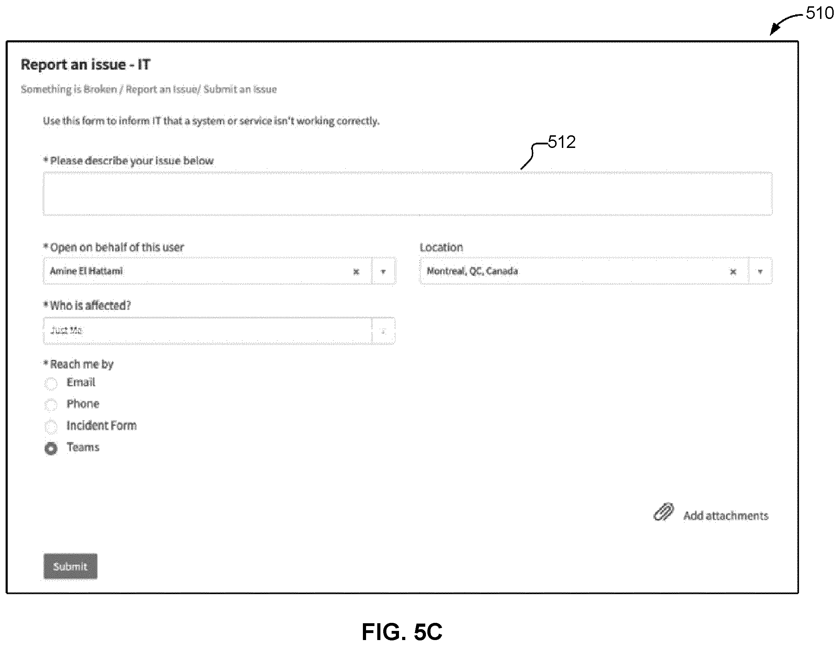

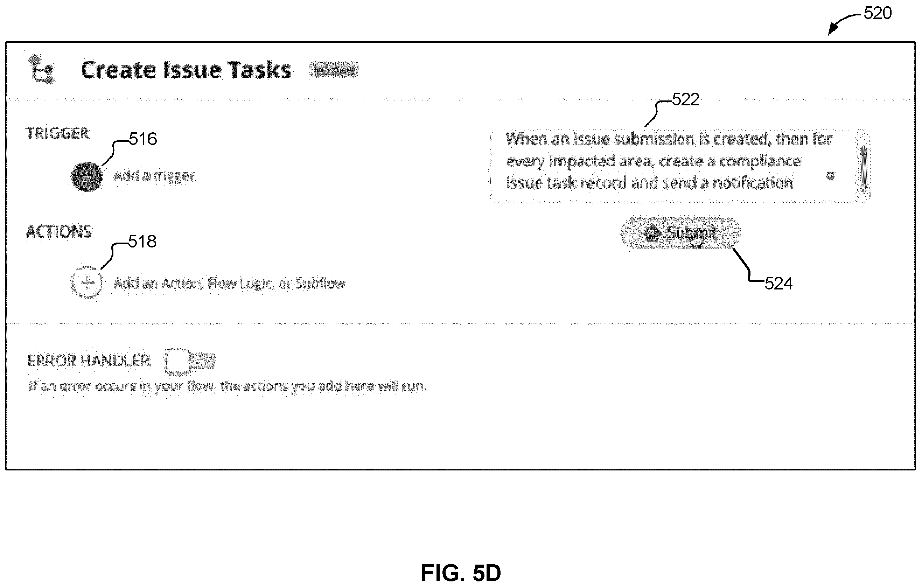

Figures 5C-E are diagrams illustrating further user interface examples associated with automatically implementing a computerized flow based on text input. In user interface window 510 of Figure 5C, a user is able to input various information related to (in this specific example) an information technology (IT) issue, including a text description of the IT issue in text box 512. Window 520 of Figure 5D is an example of an interface element used by a developer after the user has submitted information in user interface window 510. The text in text box 522 is utilized for flow generation. In the example shown, this text reads: "When an issue submission is created, then for every impacted area, create a compliance Issue task record and send a notification". In the example shown, the user is able to click on submit button 524 to submit the flow description in text box 522 for automatic generation of a flow based on the submitted flow description. In some embodiments, the flow description is flow description 120 of Figure 1A to be submitted to text-to-flow unit 100. In some embodiments, text-to-text model 110 of Figure 1A is utilized to convert the flow description to API calls to generate a corresponding flow. In the example shown, submission of the flow description occurs within the same user interface used to generate flows graphically. Stated alternatively, in this example, instead of submitting a text description in text box 522, the same flow can be generated by adding a trigger and actions via the graphical user interface using add trigger button 516 and add action button 518.

Flow 530 of Figure 5E is the flow that has been generated based on the flow description submitted via text box 522. In the example shown, the format of flow 530 is the same as the formats for flow 200 of Figure 2 and flow 300 of Figure 3A. In the example shown, the "When an issue submission is created" portion of the flow description maps to trigger portion 532 of flow 530, and the other portions of the flow description map to corresponding action steps. In the example illustrated, the user is able to add additional action steps to the generated flow graphically and manually by clicking on add action button 534. In the example shown, the user is also able to examine details of the trigger by clicking on trigger portion 532. This brings up user interface element 526, which includes information about the trigger, including the slot value generated for the trigger. In this case, the slot value is table 528.

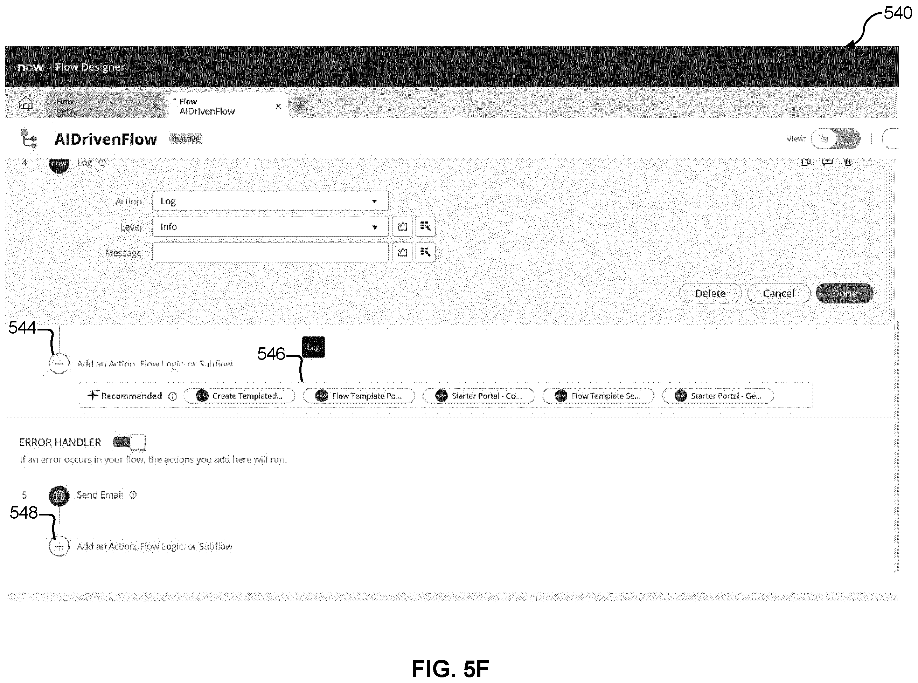

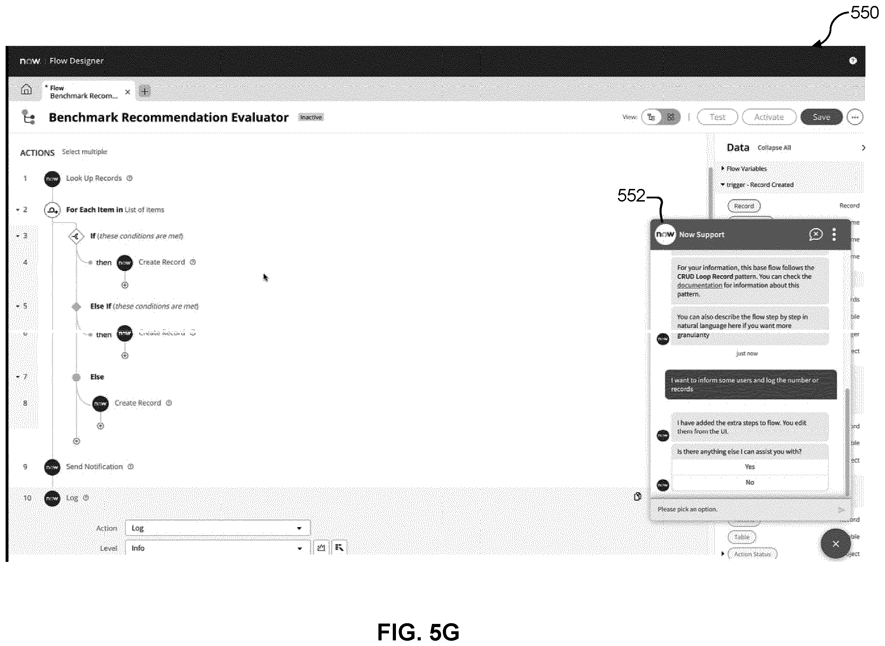

Figures 5F and 5G are diagrams illustrating further user interface examples associated with automatically implementing a computerized flow. In user interface window 540 of Figure 5F, a user is able to add additional action steps to the generated flow by clicking on add action button 544. User interface window 540 also graphically illustrates one or more recommended action steps 546 which can be directly selected by a user as an alternative method of selecting additional action steps for the generated flow. The recommended action steps 546 may be generated by the machine learning model, based on the action steps already present in the generated flow, based on a received flow description, and/or based on predicted next action steps. Where more than one recommended action steps have been identified by the machine learning model, two or more recommended action steps 546 may be displayed to the user. Furthermore, the two or more recommended action steps 546 may be ordered based on a confidence level of the machine learning model in each of the recommended action steps and/or to present more frequently used action steps first.

User interface window 540 of Figure 5F also displays an additional error handler view, which includes a second add action button 548, enabling one or more action steps to be added to an error handler flow, in accordance with any of the methods described herein. Displaying both the generated workflow and the associated error handler in a single user interface window can aid a user in implementing suitable error handling steps for the particular workflow being generated.

User interface window 550 of Figure 5G displays an additional chat-box 552 interface for providing user input to generate workflows in accordance with the methods described herein. Chat-box 552 may be a graphical representation of a chat bot interface. Chat-box 552 may comprise one or more of the add action buttons described previously, which enable a user to add additional action steps to the workflow. Chat-box 552 may also be configured to accept natural language input, such as a flow description or natural language description of additional flow steps that user desires to be added to generated flow. Natural language input received by the chat-box 552 may cause one or more additional action steps to be added to the generated flow, in accordance with any of the methods described previously. Furthermore, chat-box 552 may display natural language responses configured to request additional natural language input and/or provide context to recommend action steps and/or provide summary explanations of the functions of recommended actions steps displayed in the user interface window 540.

In the methods described above additional action steps may be automatically added to the workflow in response to a user selecting an "add action" user interface element or through a natural language input. Alternatively, the user may only be presented with one or more recommended action steps to be added to the workflow and the user may then be required to select which action step to add to the flow (or alternatively request additional action steps to be recommended). User selections of recommended action steps may be captured and fed back into the machine learning model to weight future recommendations in favour of previously selected action steps, thereby increasing the likelihood a user's preferred actions steps will be recommended to them in the future. The user may also be presented, in the graphical user interface, a summary of one or more recommended actions steps, which explains the functionality of the recommended action steps (thereby aiding the user in selecting between different action steps). In still further examples, an associated confidence value may be displayed with each recommended action step, which is indicative of how confident the machine learning model is in recommending particular action steps. In some examples, recommended action steps having an associated confidence level greater or equal to a threshold confidence value (for example, 50%, 60%, 70%, 80%, 90%, 95% or 99%) may automatically be added to the generated flow, whilst recommended action steps having an associated confidence level less than the threshold may only be added to the generated workflow in response to an additional user input.

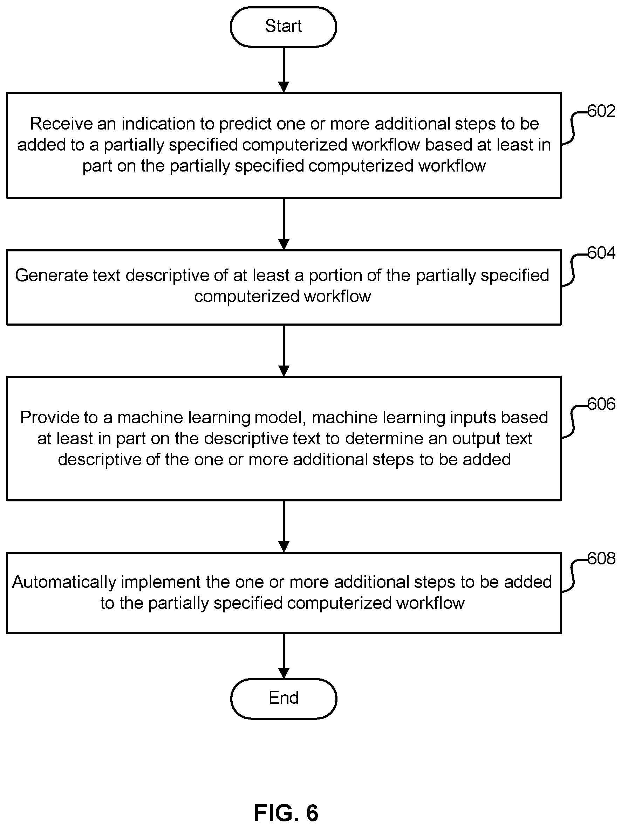

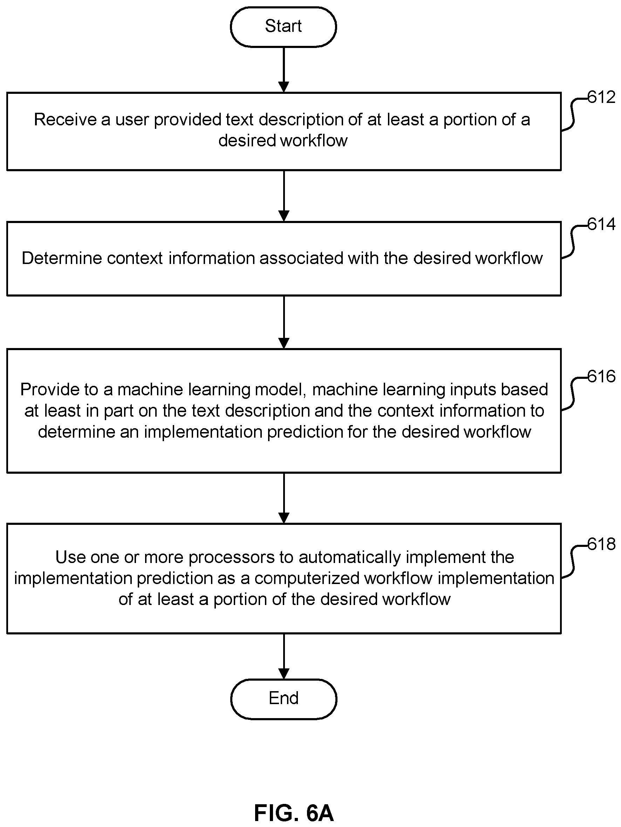

Figure 6 is a flow diagram illustrating an embodiment of a process for automatically predicting and implementing additional steps of a computerized flow. In some embodiments, the process of Figure 6 is performed at least in part by additional steps unit 100 of Figure 1.

At 602, an indication to predict one or more additional steps to be added to a partially specified computerized workflow based at least in part on the partially specified computerized workflow is received. The partially specified computerized workflow may be generated manually by a user (e.g., via a graphical user interface) and/or generated automatically by one or more machine learning models. An example of a partially specified computerized workflow is flow 500 of Figure 5A. In some embodiments, the indication to predict the one or more additional steps is received via a user interaction with a user interface element of a graphical user interface (e.g., next steps button 506 of Figure 5A).

At 604, text descriptive of at least a portion of the partially specified computerized workflow is generated. In some embodiments, the text is converted from one or more other data formats. For example, the text may be generated by flow-to-text converter 104 of Figure 1 and/or context-to-text converter 106 of Figure 1.

At 606, machine learning inputs based at least in part on the descriptive text are provided to a machine learning model to determine an output text descriptive of the one or more additional steps to be added. In some embodiments, the machine learning model is text-to-text model 110. In addition to the descriptive text, the machine learning inputs can also include context parameters (e.g., context 124 of Figure 1) and flow embedding data (e.g., selected from flow embeddings 126 of Figure 1).

At 608, one or more processors are used to automatically implement the one or more additional steps to be added to the partially specified computerized workflow. In some embodiments, an implementation prediction is converted from the output text to API calls to a flow builder application. In some embodiments, the flow builder application is flow builder application 114 of Figure 1.

Figure 6A is a flow diagram illustrating an embodiment of a process for automatically implementing a computerized flow based on text input. In some embodiments, the process of Figure 6A is performed by text-to-flow unit 100 of Figure 1A.

At 612, a user provided text description of at least a portion of a desired workflow is received. In some embodiments, the user provided text description is flow description 120 of Figure 1A. In various embodiments, the user provided text description is a natural language input from the user.

At 614, context information associated with the desired workflow is determined. In some embodiments, the context information is determined from received inputs other than the received user provided text description. Examples of such inputs include builder current state 122, context 124, and flow embeddings 126 of Figure 1A. Context information may be in the form of various types of information that can be used to condition and refine the ultimate computerized flow that is generated, including but not limited to existing steps of a flow (in a scenario in which the flow generated is a partial flow to be added to the existing steps), metadata and flow generation preferences associated with the flow, and a flow embedding selection that weights and/or biases the underlying machine learning model that is utilized to predict the computerized flow.

At 616, machine learning inputs based at least in part on the text description and the context information are provided to a machine learning model to determine an implementation prediction for the desired workflow. In some embodiments, the machine learning model is text-to-text model 110 of Figure 1A. In various embodiments, the machine learning model outputs the implementation prediction in text form.

At 618, one or more processors are used to automatically implement the implementation prediction as a computerized workflow implementation of at least a portion of the desired workflow. In some embodiments, the implementation prediction is converted from a text format to API calls to a flow builder application. In some embodiments, the flow builder application is flow builder application 114 of Figure 1A.

Figure 7 is a functional diagram illustrating a programmed computer system. In some embodiments, the processes of Figure 4 and/or Figure 6 and/or Figure 6A are executed by computer system 700. Computer system 700 is an example of a processor.

In the example shown, computer system 700 includes various subsystems as described below. Computer system 700 includes at least one microprocessor subsystem (also referred to as a processor or a central processing unit (CPU)) 702. Computer system 700 can be physical or virtual (e.g., a virtual machine). For example, processor 702 can be implemented by a single-chip processor or by multiple processors. In some embodiments, processor 702 is a general-purpose digital processor that controls the operation of computer system 700. Using instructions retrieved from memory 710, processor 702 controls the reception and manipulation of input data, and the output and display of data on output devices (e.g., display 718).

Processor 702 is coupled bi-directionally with memory 710, which can include a first primary storage, typically a random-access memory (RAM), and a second primary storage area, typically a read-only memory (ROM). As is well known in the art, primary storage can be used as a general storage area and as scratch-pad memory, and can also be used to store input data and processed data. Primary storage can also store programming instructions and data, in the form of data objects and text objects, in addition to other data and instructions for processes operating on processor 702. Also, as is well known in the art, primary storage typically includes basic operating instructions, program code, data, and objects used by the processor 702 to perform its functions (e.g., programmed instructions). For example, memory 710 can include any suitable computer-readable storage media, described below, depending on whether, for example, data access needs to be bi-directional or uni-directional. For example, processor 702 can also directly and very rapidly retrieve and store frequently needed data in a cache memory (not shown).

Persistent memory 712 (e.g., a removable mass storage device) provides additional data storage capacity for computer system 700, and is coupled either bi-directionally (read/write) or uni-directionally (read only) to processor 702. For example, persistent memory 712 can also include computer-readable media such as magnetic tape, flash memory, PC- CARDS, portable mass storage devices, holographic storage devices, and other storage devices. A fixed mass storage 720 can also, for example, provide additional data storage capacity. The most common example of fixed mass storage 720 is a hard disk drive. Persistent memory 712 and fixed mass storage 720 generally store additional programming instructions, data, and the like that typically are not in active use by the processor 702. It will be appreciated that the information retained within persistent memory 712 and fixed mass storages 720 can be incorporated, if needed, in standard fashion as part of memory 710 (e.g., RAM) as virtual memory.

In addition to providing processor 702 access to storage subsystems, bus 714 can also be used to provide access to other subsystems and devices. As shown, these can include a display monitor 718, a network interface 716, a keyboard 704, and a pointing device 706, as well as an auxiliary input/output device interface, a sound card, speakers, and other subsystems as needed. For example, pointing device 706 can be a mouse, stylus, track ball, or tablet, and is useful for interacting with a graphical user interface.

Network interface 716 allows processor 702 to be coupled to another computer, computer network, or telecommunications network using a network connection as shown. For example, through network interface 716, processor 702 can receive information (e.g., data objects or program instructions) from another network or output information to another network in the course of performing method/process steps. Information, often represented as a sequence of instructions to be executed on a processor, can be received from and outputted to another network. An interface card or similar device and appropriate software implemented by (e.g., executed/performed on) processor 702 can be used to connect computer system 700 to an external network and transfer data according to standard protocols. Processes can be executed on processor 702, or can be performed across a network such as the Internet, intranet networks, or local area networks, in conjunction with a remote processor that shares a portion of the processing. Additional mass storage devices (not shown) can also be connected to processor 702 through network interface 716.

An auxiliary I/O device interface (not shown) can be used in conjunction with computer system 700. The auxiliary I/O device interface can include general and customized interfaces that allow processor 702 to send and, more typically, receive data from other devices such as microphones, touch-sensitive displays, transducer card readers, tape readers, voice or handwriting recognizers, biometrics readers, cameras, portable mass storage devices, and other computers.

In addition, various embodiments disclosed herein further relate to computer storage products with a computer readable medium that includes program code for performing various computer-implemented operations. The computer-readable medium is any data storage device that can store data which can thereafter be read by a computer system. Examples of computer-readable media include, but are not limited to, all the media mentioned above: magnetic media such as hard disks, floppy disks, and magnetic tape; optical media such as CD- ROM disks; magneto-optical media such as optical disks; and specially configured hardware devices such as application-specific integrated circuits (ASICs), programmable logic devices (PLDs), and ROM and RAM devices. Examples of program code include both machine code, as produced, for example, by a compiler, or files containing higher level code (e.g., script) that can be executed using an interpreter.

The computer system shown in Figure 7 is but an example of a computer system suitable for use with the various embodiments disclosed herein. Other computer systems suitable for such use can include additional or fewer subsystems. In addition, bus 714 is illustrative of any interconnection scheme serving to link the subsystems. Other computer architectures having different configurations of subsystems can also be utilized.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A method, comprising:
receiving an indication to predict one or more additional steps to be added to a partially specified computerized workflow based at least in part on the partially specified computerized workflow, wherein the indication to predict the one or more additional steps to be added is received via a graphical user interface;
generating text descriptive of at least a portion of the partially specified computerized workflow;
providing to a machine learning model, machine learning inputs based at least in part on the descriptive text to determine an output text descriptive of the one or more additional steps to be added;
generating, by the machine learning model, an associated confidence level for each of the one or more additional steps to be added; and
using one or more processors to automatically implement the one or more additional steps to be added,
wherein when more than one additional steps to be added are determined by the machine learning model, each of said more than one additional steps to be added are displayed in the graphical user interface, and
wherein automatically implementing the one or more additional steps to be added comprises automatically adding any additional steps having an associated confidence level greater or equal to a threshold confidence value to the partially specified computerized workflow.

2. The method of claim 1, wherein the partially specified computerized workflow has at least in part been specified manually by a user via the graphical user interface.

3. The method of any preceding claim, wherein the partially specified computerized workflow has at least in part been generated automatically.

4. The method of any preceding claim, wherein the one or more additional steps to be added belong to an enumerated collection of available steps that the machine learning model is permitted to output.

5. The method of any preceding claim, wherein generating the descriptive text includes converting data in an Extensible Markup Language (XML) or JavaScript Object Notation (JSON) format to a text format.

6. The method of any preceding claim, wherein the machine learning model is a text-to-text pre-trained model.

7. The method of any preceding claim, wherein the machine learning model has been pre-trained on a dataset and then fine-tuned for a prediction task.

8. The method of any preceding claim, wherein the machine learning model has been trained based at least in part on a plurality of training instances of synthetically generated training data,
wherein at least one training instance of the plurality of training instances comprises a flow representation that is divided into an initial steps portion and an additional steps portion at a randomly selected split point, or
wherein the plurality of training instances is comprised of flow representations of different lengths and at least one flow representation of the flow representations of different lengths is comprised of flow steps selected according to a statistical distribution of flow steps.

9. The method of any preceding claim, further comprising providing to the machine learning model, context information comprising conditioning parameters for the machine learning model, and/or a selection of a tensor data object from a list of tensor data objects, wherein each tensor data object of the list of tensor data objects is associated with different model weights for the machine learning model.

10. The method of any preceding claim, wherein using the one or more processors to automatically implement the one or more additional steps to be added includes causing the one or more processors to convert a text format prediction to one or more application programming interface messages, and
wherein using the one or more processors to automatically implement the one or more additional steps to be added further includes transmitting the one or more application programming interface messages to an application configured to generate computerized workflow steps.

11. The method of any preceding claim, wherein the partially specified computerized workflow includes a trigger condition and at least one action step that is configured to execute in response to a determination that the trigger condition has occurred.

12. The method of any preceding claim, further comprising displaying in the graphical user interface a computerized workflow that combines the partially specified computerized workflow and the one or more additional steps to be added.

13. A system, comprising:
one or more processors configured to:
receive an indication to predict one or more additional steps to be added to a partially specified computerized workflow based at least in part on the partially specified computerized workflow, wherein the indication to predict the one or more additional steps to be added is received via a graphical user interface;
generate text descriptive of at least a portion of the partially specified computerized workflow;
provide to a machine learning model, machine learning inputs based at least in part on the descriptive text to determine an output text descriptive of the one or more additional steps to be added;
receive, from the machine learning model, an associated confidence level for each of the one or more additional steps to be added; and
automatically implement the one or more additional steps to be added; and
a memory coupled to at least one of the one or more processors and configured to provide at least one of the one or more processors with instructions,
wherein when more than one additional steps to be added are determined by the machine learning model, each of said more than one additional steps to be added are displayed in the graphical user interface, and
wherein the processor is configured to automatically add any additional steps having an associated confidence level greater or equal to a threshold confidence value to the partially specified computerized workflow, whereby to automatically implement the one or more additional steps to be added.

14. A computer readable medium comprising computer instructions which, when executed by a computer, cause the computer to carry out the method of any of claims 1 to 12.

## Patentansprüche

1. Verfahren, umfassend:
Empfangen einer Angabe, um einen oder mehrere zusätzliche Schritte, die zu einem teilweise spezifizierten computerisierten Arbeitsablauf hinzuzufügen sind, zumindest teilweise basierend auf dem teilweise spezifizierten computerisierten Arbeitsablauf vorherzusagen, wobei die Angabe, um den einen oder die mehreren zusätzlichen Schritte, die hinzuzufügen sind, vorherzusagen, über eine grafische Benutzerschnittstelle empfangen wird;
Generieren von Text, der mindestens einen Abschnitt des teilweise spezifizierten computerisierten Arbeitsablaufs beschreibt;
Bereitstellen, an ein Maschinenlernmodell, von Maschinenlerneingaben zumindest teilweise basierend auf dem beschreibenden Text, um einen Ausgabetext zu bestimmen, der den einen oder die mehreren zusätzlichen Schritte, die hinzuzufügen sind, zu beschreiben;
Generieren, durch das Maschinenlernmodell, eines zugehörigen Konfidenzniveaus für jeden von dem einen oder den mehreren zusätzlichen Schritten, die hinzuzufügen sind; und
Verwenden eines oder mehrerer Prozessoren, um den einen oder die mehreren zusätzlichen Schritte, die hinzuzufügen sind, automatisch zu implementieren,
wobei, wenn mehr als ein zusätzlicher Schritt, die hinzuzufügen sind, durch das Maschinenlernmodell bestimmt wird, jeder von dem mehr als einen zusätzlichen Schritt, die hinzuzufügen sind, in der grafischen Benutzerschnittstelle angezeigt wird, und
wobei ein automatisches Implementieren des einen oder der mehreren zusätzlichen Schritte, die hinzuzufügen sind, automatisches Hinzufügen beliebiger zusätzlicher Schritte, die ein zugehöriges Konfidenzniveau von größer oder gleich einem Schwellenkonfidenzwert aufweisen, zu dem teilweise spezifizierten computerisierten Arbeitsablauf umfasst.

2. Verfahren nach Anspruch 1, wobei der teilweise spezifizierte computerisierte Arbeitsablauf zumindest teilweise von einem Benutzer über die grafische Benutzerschnittstelle spezifiziert wurde.

3. Verfahren nach einem der vorhergehenden Ansprüche, wobei der teilweise spezifizierte computerisierte Arbeitsablauf zumindest teilweise automatisch generiert wurde.

4. Verfahren nach einem der vorhergehenden Ansprüche, wobei der eine oder die mehreren zusätzlichen Schritte, die hinzuzufügen sind, zu einer aufgeführten Sammlung von verfügbaren Schritten gehören, die das Maschinenlernmodell ausgeben darf.

5. Verfahren nach einem der vorhergehenden Ansprüche, wobei das Generieren des beschreibenden Texts Umwandeln von Daten in einem Format der Extensible Markup Language (XML) oder JavaScript Object Notation (JSON) in ein Textformat beinhaltet.

6. Verfahren nach einem der vorhergehenden Ansprüche, wobei das Maschinenlernmodell ein vortrainiertes Text-zu-Text-Modell ist.

7. Verfahren nach einem der vorhergehenden Ansprüche, wobei das Maschinenlernmodell an einem Datensatz vortrainiert wurde und dann für eine Vorhersageaufgabe genau eingestellt wurde.

8. Verfahren nach einem der vorhergehenden Ansprüche, wobei das Maschinenlernmodell zumindest teilweise basierend auf einer Vielzahl von Trainingsinstanzen von synthetisch generierten Trainingsdaten trainiert wurde, wobei mindestens eine Trainingsinstanz der Vielzahl von Trainingsinstanzen eine Ablaufdarstellung umfasst, die an einem zufällig ausgewählten Teilungspunkt in einen Abschnitt von anfänglichen Schritten und einen Abschnitt von zusätzlichen Schritten unterteilt ist, oder
wobei die Vielzahl von Trainingsinstanzen aus Ablaufdarstellungen mit unterschiedlichen Längen besteht und mindestens eine Ablaufdarstellung der Ablaufdarstellungen mit unterschiedlichen Längen aus Ablaufschritten besteht, die gemäß einer statistischen Verteilung von Ablaufschritten ausgewählt sind.

9. Verfahren nach einem der vorhergehenden Ansprüche, ferner umfassend Bereitstellen, an das Maschinenlernmodell, von Kontextinformationen, die Konditionierungsparameter für das Maschinenlernmodell umfassen, und/oder einer Auswahl eines Tensor-Datenobjekts aus einer Liste von Tensor-Datenobjekten, wobei jedes Tensor-Datenobjekt der Liste von Tensor-Datenobjekten mit unterschiedlichen Modellgewichtungen für das Maschinenlernmodell assoziiert ist.

10. Verfahren nach einem der vorhergehenden Ansprüche, wobei das Verwenden des einen oder der mehreren Prozessoren, um den einen oder die mehreren Schritte, die hinzuzufügen sind, automatisch zu implementieren, Bewirken beinhaltet, dass der eine oder die mehreren Prozessoren eine Textformatvorhersage in eine oder mehrere Anwendungsprogrammierungsschnittstellennachrichten umwandeln, und wobei das Verwenden des einen oder der mehreren Prozessoren, um den einen oder die mehreren zusätzlichen Schritte, die hinzuzufügen sind, automatisch zu implementieren, ferner Übertragen der einen oder der mehreren Anwendungsprogrammierungsschnittstellennachrichten an eine Anwendung, die dazu konfiguriert ist, Schritte eines computerisierten Arbeitsablaufs zu generieren, beinhaltet.

11. Verfahren nach einem der vorhergehenden Ansprüche, wobei der teilweise spezifizierte computerisierte Arbeitsablauf eine Auslöserbedingung und mindestens einen Handlungsschritt beinhaltet, der dazu konfiguriert ist, als Reaktion auf eine Bestimmung, dass die Auslöserbedingung aufgetreten ist, ausgeführt zu werden.

12. Verfahren nach einem der vorhergehenden Ansprüche, ferner umfassend Anzeigen, in der grafischen Benutzerschnittstelle, eines computerisierten Arbeitsablaufs, der den teilweise spezifizierten computerisierten Arbeitsablauf und den einen oder die mehreren zusätzlichen Schritte, die hinzuzufügen sind, kombiniert.

13. System, umfassend:
einen oder mehrere Prozessoren, die zu Folgendem konfiguriert sind:
Empfangen einer Angabe, um einen oder mehrere zusätzliche Schritte, die zu einem teilweise spezifizierten computerisierten Arbeitsablauf hinzuzufügen sind, zumindest teilweise basierend auf dem teilweise spezifizierten computerisierten Arbeitsablauf vorherzusagen, wobei die Angabe, um den einen oder die mehreren zusätzlichen Schritte, die hinzuzufügen sind, vorherzusagen, über eine grafische Benutzerschnittstelle empfangen wird;
Generieren von Text, der mindestens einen Abschnitt des teilweise spezifizierten computerisierten Arbeitsablaufs beschreibt;
Bereitstellen, an ein Maschinenlernmodell, von Maschinenlerneingaben zumindest teilweise basierend auf dem beschreibenden Text, um einen Ausgabetext zu bestimmen, der den einen oder die mehreren zusätzlichen Schritte, die hinzuzufügen sind, zu beschreiben;
Generieren, von dem Maschinenlernmodell, eines zugehörigen Konfidenzniveaus für jeden von dem einen oder den mehreren zusätzlichen Schritten, die hinzuzufügen sind; und
automatisches Implementieren des einen oder der mehreren zusätzlichen
Schritte, die hinzuzufügen sind; und
einen Speicher, der an mindestens einen von dem einen oder den mehreren Prozessoren gekoppelt ist und dazu konfiguriert ist, mindestens einem von dem einen oder den mehreren Prozessoren Anweisungen bereitzustellen,
wobei, wenn mehr als ein zusätzlicher Schritt, die hinzuzufügen sind, durch das Maschinenlernmodell bestimmt wird, jeder von dem mehr als einen zusätzlichen Schritt, die hinzuzufügen sind, in der grafischen Benutzerschnittstelle angezeigt wird, und
wobei der Prozessor dazu konfiguriert ist, automatisch beliebige zusätzliche Schritte, die ein zugehöriges Konfidenzniveau von größer oder gleich einem Schwellenkonfidenzwert aufweisen, zu dem teilweise spezifizierten computerisierten Arbeitsablauf hinzuzufügen, um automatisch den einen oder die mehreren zusätzlichen Schritte, die hinzuzufügen sind, zu implementieren.

14. Computerlesbares Medium, das Computeranweisungen umfasst, die, wenn sie von einem Computer ausgeführt werden, den Computer dazu veranlassen, das Verfahren nach einem der Ansprüche 1 bis 12 auszuführen.

## Revendications

1. Procédé, comprenant :
la réception d'une indication pour prédire une ou plusieurs étapes supplémentaires à ajouter à un flux de travail informatisé partiellement spécifié sur la base, au moins en partie, du flux de travail informatisé partiellement spécifié, dans lequel l'indication pour prédire les une ou plusieurs étapes supplémentaires à ajouter est reçue via une interface utilisateur graphique ;
la génération d'un texte descriptif d'au moins une partie du flux de travail informatisé partiellement spécifié ;
la fourniture à un modèle d'apprentissage automatique d'entrées d'apprentissage automatique basées au moins en partie sur le texte descriptif pour déterminer un texte de sortie descriptif des une ou plusieurs étapes supplémentaires à ajouter ;
la génération, par le modèle d'apprentissage automatique, d'un niveau de confiance associé pour chacune des une ou plusieurs étapes supplémentaires à ajouter ; et
l'utilisation d'un ou plusieurs processeurs pour mettre en œuvre automatiquement les une ou plusieurs étapes supplémentaires à ajouter,
dans lequel, lorsque plus d'une étape supplémentaire à ajouter est déterminée par le modèle d'apprentissage automatique, chacune desdites plus d'une étape supplémentaire à ajouter est affichée dans l'interface utilisateur graphique, et
dans lequel la mise en œuvre automatique des une ou plusieurs étapes supplémentaires à ajouter comprend l'ajout automatique de toute étape supplémentaire ayant un niveau de confiance associé supérieur ou égal à une valeur de seuil de confiance au flux de travail informatisé partiellement spécifié.

2. Procédé selon la revendication 1, dans lequel le flux de travail informatisé partiellement spécifié a été spécifié, au moins en partie, manuellement par un utilisateur via l'interface utilisateur graphique.

3. Procédé selon l'une quelconque des revendications précédentes, dans lequel le flux de travail informatisé partiellement spécifié a été généré, au moins en partie, automatiquement.

4. Procédé selon l'une quelconque des revendications précédentes, dans lequel les une ou plusieurs étapes supplémentaires à ajouter appartiennent à une collection énumérée d'étapes disponibles que le modèle d'apprentissage automatique est autorisé à produire en sortie.

5. Procédé selon l'une quelconque des revendications précédentes, dans lequel la génération du texte descriptif comprend la conversion de données dans un format de langage de balisage extensible (XML) ou de notation d'objet JavaScript (JSON) en un format texte.

6. Procédé selon l'une quelconque des revendications précédentes, dans lequel le modèle d'apprentissage automatique est un modèle pré-entraîné de texte à texte.

7. Procédé selon l'une quelconque des revendications précédentes, dans lequel le modèle d'apprentissage automatique a été pré-entraîné sur un ensemble de données puis affiné pour une tâche de prédiction.

8. Procédé selon l'une quelconque des revendications précédentes, dans lequel le modèle d'apprentissage automatique a été entraîné sur la base, au moins en partie, d'une pluralité d'instances d'entraînement de données d'entraînement générées de manière synthétique, dans lequel au moins une instance d'entraînement de la pluralité d'instances d'entraînement comprend une représentation de flux qui est divisée en une partie d'étapes initiales et une partie d'étapes supplémentaires à un point de division sélectionné de manière aléatoire, ou
dans lequel la pluralité d'instances d'entraînement est composée de représentations de flux de différentes longueurs et au moins une représentation de flux parmi les représentations de flux de différentes longueurs est composée d'étapes de flux sélectionnées selon une distribution statistique d'étapes de flux.

9. Procédé selon l'une quelconque des revendications précédentes, comprenant en outre la fourniture au modèle d'apprentissage automatique d'informations de contexte comprenant des paramètres de conditionnement pour le modèle d'apprentissage automatique, et/ou une sélection d'un objet de données de tenseur à partir d'une liste d'objets de données de tenseur, dans lequel chaque objet de données de tenseur de la liste d'objets de données de tenseur est associé à différents poids de modèle pour le modèle d'apprentissage automatique.

10. Procédé selon l'une quelconque des revendications précédentes, dans lequel l'utilisation des un ou plusieurs processeurs pour mettre en œuvre automatiquement les une ou plusieurs étapes supplémentaires à ajouter comprend le fait d'amener les un ou plusieurs processeurs à convertir une prédiction au format texte en un ou plusieurs messages d'interface de programmation d'application, et
dans lequel l'utilisation des un ou plusieurs processeurs pour mettre en œuvre automatiquement les une ou plusieurs étapes supplémentaires à ajouter comprend en outre la transmission des un ou plusieurs messages d'interface de programmation d'application à une application configurée pour générer des étapes de flux de travail informatisé.

11. Procédé selon l'une quelconque des revendications précédentes, dans lequel le flux de travail informatisé partiellement spécifié comprend une condition de déclenchement et au moins une étape d'action qui est configurée pour s'exécuter en réponse à une détermination que la condition de déclenchement s'est produite.

12. Procédé selon l'une quelconque des revendications précédentes, comprenant en outre l'affichage dans l'interface utilisateur graphique d'un flux de travail informatisé qui combine le flux de travail informatisé partiellement spécifié et les une ou plusieurs étapes supplémentaires à ajouter.

13. Système, comprenant :
un ou plusieurs processeurs configurés pour :
recevoir une indication pour prédire une ou plusieurs étapes supplémentaires à ajouter à un flux de travail informatisé partiellement spécifié sur la base, au moins en partie, du flux de travail informatisé partiellement spécifié, dans lequel l'indication pour prédire les une ou plusieurs étapes supplémentaires à ajouter est reçue via une interface utilisateur graphique ;
générer un texte descriptif d'au moins une partie du flux de travail informatisé partiellement spécifié ;
fournir à un modèle d'apprentissage automatique des entrées d'apprentissage automatique basées au moins en partie sur le texte descriptif pour déterminer un texte de sortie descriptif des une ou plusieurs étapes supplémentaires à ajouter ;
recevoir, du modèle d'apprentissage automatique, un niveau de confiance associé pour chacune des une ou plusieurs étapes supplémentaires à ajouter ; et
mettre en œuvre automatiquement les une ou plusieurs étapes supplémentaires à ajouter ; et
une mémoire couplée à au moins l'un des un ou plusieurs processeurs et configurée pour fournir des instructions à au moins l'un des un ou plusieurs processeurs,
dans lequel, lorsque plus d'une étape supplémentaire à ajouter est déterminée par le modèle d'apprentissage automatique, chacune desdites plus d'une étape supplémentaire à ajouter est affichée dans l'interface utilisateur graphique, et
dans lequel le processeur est configuré pour ajouter automatiquement toute étape supplémentaire ayant un niveau de confiance associé supérieur ou égal à une valeur de seuil de confiance au flux de travail informatisé partiellement spécifié, pour ainsi mettre en œuvre automatiquement les une ou plusieurs étapes supplémentaires à ajouter.

14. Support lisible par ordinateur comprenant des instructions informatiques qui, lorsqu'elles sont exécutées par un ordinateur, amènent l'ordinateur à exécuter le procédé selon l'une quelconque des revendications 1 à 12.
